(19) Europäisches Patentamt
European Patent Office
Office européen des brevets

(11) **EP 1 852 249 A1**

(12) **EUROPEAN PATENT APPLICATION**
published in accordance with Art. 158(3) EPC

(43) Date of publication:
**07.11.2007 Bulletin 2007/45**

(21) Application number: **06714475.8**

(22) Date of filing: **17.02.2006**

(51) Int Cl.:
**B32B 5/04** (2006.01)     **A41B 17/00** (2006.01)
**A41D 31/02** (2006.01)     **B32B 7/02** (2006.01)

(86) International application number:
**PCT/JP2006/303335**

(87) International publication number:
**WO 2006/090808 (31.08.2006 Gazette 2006/35)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.02.2005 JP 2005047553**
**23.03.2005 JP 2005083499**
**27.12.2005 JP 2005374727**

(71) Applicant: **Teijin Fibers Limited**
**Osaka-shi, Osaka 541-0054 (JP)**

(72) Inventors:
• **YASUI, Satoshi**
  **home, Chuo-ku, Osaka-shi, Osaka, 5410054 (JP)**
• **YAMAGUCHI, Takashi**
  **home, Chuo-ku, Osaka-shi, Osaka, 5410054 (JP)**

(74) Representative: **HOFFMANN EITLE**
**Patent- und Rechtsanwälte**
**Arabellastrasse 4**
**81925 München (DE)**

(54) **COMPOSITE FABRIC MATERIAL UNDERGOING THREE-DIMENSIONAL STRUCTURE CHANGE UPON WATER ABSORPTION AND TEXTILE PRODUCT**

(57)     The composite fabric material of the invention comprises a water-absorbing woven or knitted fabric, the area and thickness of which, or the area or thickness of which, increases by at least 10% in its water-absorbed state relative to its dried state; and an area change-restricting means composed of a woven or knitted fabric, nonwoven fabric, resin film or resin coating, the area and thickness of which does not substantially change in its water-absorbed state relative to its dried state, the area change-restricting means being bonded or sewn onto at least one side of the water-absorbing woven or knitted fabric over a partial region so as to leave a plurality of other partial regions separated from each other, or over the entire region, the means serving to restrict change in area by water absorption at the bonded or sewn portions of the water-absorbing woven or knitted fabric. Upon wetting with water, the area and thickness, or the area or thickness, of the water-absorbing woven or knitted fabric at the plurality of the partial regions that are separated from each other increases, thereby changing the three dimensional structure of the composite fabric material.

Fig. 1

(A)

(B)

(DRIED STATE)

(WATER-ABSORBED STATE)

**Description**

Technical Field

The present invention relates to a composite fabric material that exhibits a three-dimensional structural change upon absorption of water, whereby water absorption results in creation of irregularities on the structure surface, increased thickness or improved air permeability, thereby allowing feelings of stickiness, mustiness and coldness to be reduced, as well as to its textile products.

Background Art

Woven and knitted fabrics composed of synthetic fibers or natural fibers, when used as clothes such as sportswear and inner clothing, have often produced a musty or sticky feel as a result of perspiration from the skin.

As means of eliminating the musty or sticky feel produced by perspiration, there have been proposed air-permeable auto-regulating woven and knitted fabrics which effectively release moisture accumulated in the clothing through improved air permeability of the fabric in the presence of perspiration, while blocking cold air through excess dispersion of moisture resulting from reduced air permeability of the fabric after perspiration is no longer produced, thereby allowing a comfortable feel to be constantly maintained. As examples, there are known fabrics using side-by-side conjugated fibers obtained by laminating different polymers such as polyester and polyamide (for example, Japanese Unexamined Patent Publication No. 2003-41462), using twisted synthetic fiber multifilament yarn composed of water-absorbing polymers (for example, Japanese Unexamined Patent Publication HEI No. 10-77544), and using acetate fibers (for example, Japanese Unexamined Patent Publication No. 2002-180323). In a prior publication, Japanese Unexamined Patent Publication No. 2005-036374, the present inventors have also proposed air-permeable self-regulating woven and knitted fabrics that employ water-absorbing self-elongating yarn.

Yet, although such air-permeable self-regulating woven and knitted fabrics exhibit improved air permeability upon moisture absorption, the dimensional changes that occur pose a problem in that the sizes of textile products made from such fabrics differ between their dry and wet states.

On the other hand, composite fabric materials composed of two or more laminated sheets are widely known as "bonded fabrics" (for example, Japanese Unexamined Patent Publication No. 2004-169262). However, a composite fabric material that undergoes a three-dimensional structural change upon water absorption has not been proposed to date.

Incidentally, the fabric proposed in Japanese Unexamined Patent Publication No. 2005-036374 is a single-layer fabric that exhibits irregularities on the structural surface upon absorption of moisture.

Disclosure of the Invention

The present invention has been accomplished in light of the circumstances described above, and its object is to provide a composite fabric material that undergoes a three-dimensional structural change upon absorption of water, whereby water absorption results in creation of irregularities on the structure surface, increased thickness or improved air permeability, thereby allowing feelings of stickiness, mustiness and coldness to be reduced, as well as to textile products produced from it.

As a result of much diligent research aimed at achieving the object stated above, the present inventors discovered that it is possible to obtain desired composite fabric materials that undergo three-dimensional structural change upon absorption of water, by bonding, sewing or attaching a water-absorbing woven or knitted fabric which has a larger area and/or thickness in a moisture-absorbed state than in a dry state, to area change-restricting means comprising a woven or knitted fabric, a nonwoven fabric, a resin film or a resin coating that undergoes substantially no change in area or thickness in the moisture-absorbed state compared to the dry state, and further assiduous research on this basis led to completion of this invention.

The present invention therefore provides "a composite fabric material comprising a water-absorbing woven or knitted fabric, the area and thickness of which, or the area or thickness of which, increases by at least 10% in its water-absorbed state relative to its dried state; and an area change-restricting means composed of a woven or knitted fabric, nonwoven fabric, resin film or resin coating, the area and thickness of which does not substantially change in its water-absorbed state relative to its dried state, the area change-restricting means being bonded or sewn onto at least one side of the water-absorbing woven or knitted fabric over a partial region so as to leave a plurality of other partial regions separated from each other, or over the entire region, the means serving to restrict change in area by water absorption at the bonded or sewn portions of the water-absorbing woven or knitted fabric, wherein the area and thickness of the water-absorbing woven or knitted fabric in its dried state are determined immediately after a test piece of the water-absorbing woven or knitted fabric is left standing in an atmosphere at a temperature at 20°C and a relative humidity at 65% for 24 hours, the area and thickness of the water-absorbing woven or knitted fabric in its water-absorbed state are determined immediately after the dry test piece surface is wetted by spraying with water until the water content of the fabric is 70 wt% relative to the weight of the test piece in its dried state, and wherein, when the composite fabric material is wetted with water, the area and thickness, or the area or thickness, of the water-absorbing woven or knitted fabric at the plurality of partial regions that are separated from each other increases, thereby changing the three dimensional structure of the composite fabric material".

In the composite fabric material of the invention, preferably the water-absorbing woven or knitted fabric contains two types of yarns which differ from each other in their water-absorbing and self-elongating properties, and wherein, when the woven or knitted fabric is dimensionally stabilized in an atmosphere at a temperature at 20°C and a relative humidity at 65% and then cut into test pieces of 30 cm long each in the warp or wale direction and in the weft or course direction, yarns (1) having high water-absorbing and self-elongating properties and yarns (2) having low water-absorbing and self-elongating properties, respectively taken from the test pieces, satisfy the following condition:

$$A/B \leq 0.9$$

wherein A represents the mean length of the yarns (1) having high water-absorbing and self-elongating properties and B represents the mean length of the yarns (2) having low water-absorbing and self-elongating properties, the lengths of the respective yarns being measured under a load of 1.76 mN/dtex when the yarn is a non-elastic yarn having a breaking elongation of 200% or less, or under a load of 0.0088 mN/dtex when the yarn is an elastic yarn having a breaking elongation of higher than 200%.

In the composite fabric material of the invention, the water-absorbing woven or knitted fabric may be suitably selected from among knitted fabrics where the yarns (1) having high water-absorbing and self-elongating properties and the yarns (2) having low water-absorbing and self-elongating properties form multiple loops in a circular knit texture.

In the composite fabric material of the invention, the water-absorbing woven or knitted fabric may also be suitably selected from among woven fabrics where the yarns (1) having high water-absorbing and self-elongating properties and the yarns (2) having low water-absorbing and self-elongating properties are combined in parallel with each other and form warps and/or wefts of the woven fabric.

In the composite fabric material of the invention, the water-absorbing woven or knitted fabric may also be suitably selected from among woven fabrics where the yarns (1) having high water-absorbing and self-elongating properties and the yarns (2) having low water-absorbing and self-elongating properties are arranged alternately every yarn, or every two or more yarns.

In the composite fabric material of the invention, preferably the yarns (1) having high water-absorbing and self-elongating properties and the yarns (2) having low water-absorbing and self-elongating properties are present in the water-absorbing woven or knitted fabric as composite yarns.

In the composite fabric material of the invention, preferably the yarn (1) having high water-absorbing and self-elongating properties is a polyetherester fiber composed of a polyetherester elastomer comprising a hard segment of polybutylene terephthalate and a soft segment of polyoxyethylene glycol.

In the composite fabric material of the invention, preferably the yarn (2) having low water-absorbing and self-elongating properties is a polyester fiber.

In the composite fabric material of the invention, preferably the water-absorbing woven or knitted fabric comprises crimped conjugated fibers made by developing the latent crimping properties of conjugated fibers comprising a polyester component and a polyamide component which are joined side-by-side with each other.

In the composite fabric material of the invention, preferably the area change-restricting means is bonded or sewn onto both sides of the water-absorbing woven or knitted fabric so as to form a three-layer structure.

In the composite fabric material of the invention, the area change-restricting means may preferably comprise a woven or knitted fabric in a mesh form, the area and thickness of which does not substantially change in its water-absorbed state relative to its dried state, and the yarns of the woven or knitted fabric in a mesh form are bonded or sewn onto at least one side of the water-absorbing woven or knitted fabric.

In the composite fabric material of the invention, the area change-restricting means may preferably comprise a woven or knitted fabric, nonwoven fabric or resin film, the area and thickness of which does not substantially change in its water-absorbed state relative to its dried state, and is bonded or sewn partly onto at least one side of the water-absorbing woven or knitted fabric.

In the composite fabric material of the invention, the area change-restricting means may preferably comprise a resin coating, the area and thickness of which does not substantially change in its water-absorbed state relative to its dried state, and is attached to at least one side of the water-absorbing woven or knitted fabric at partial regions while leaving a plurality of other partial regions separated from each other.

In the composite fabric material of the invention, preferably the resin coating comprises at least one resin selected from the group consisting of acrylic resins, urethane resins, polyester resins, silicone resins, vinyl chloride resins and nylon resins.

In the composite fabric material of the invention, preferably the area of the composite fabric material increases by less than 10% in its water-absorbed state relative to its dried state, and the composite fabric material in its water-absorbed state has an air-permeability, as measured by JIS L 1096-1998, 6.27.1, Method A (Frazir type method), which is at least 10% higher than that in its dried state.

In the composite fabric material of the invention, preferably the thickness of the composite fabric material increases by at least 10% in its water-absorbed state relative to its dried state.

A textile product of the invention comprises a composite fabric material according to the invention.

A textile product of the invention is preferably selected from the group consisting of outer clothing, sportswear, inner clothing, shoe materials, medical and sanitary supplies, bedclothes, upholstery materials, carpets, car seat fabrics and interior articles.

Brief Description of the Drawings

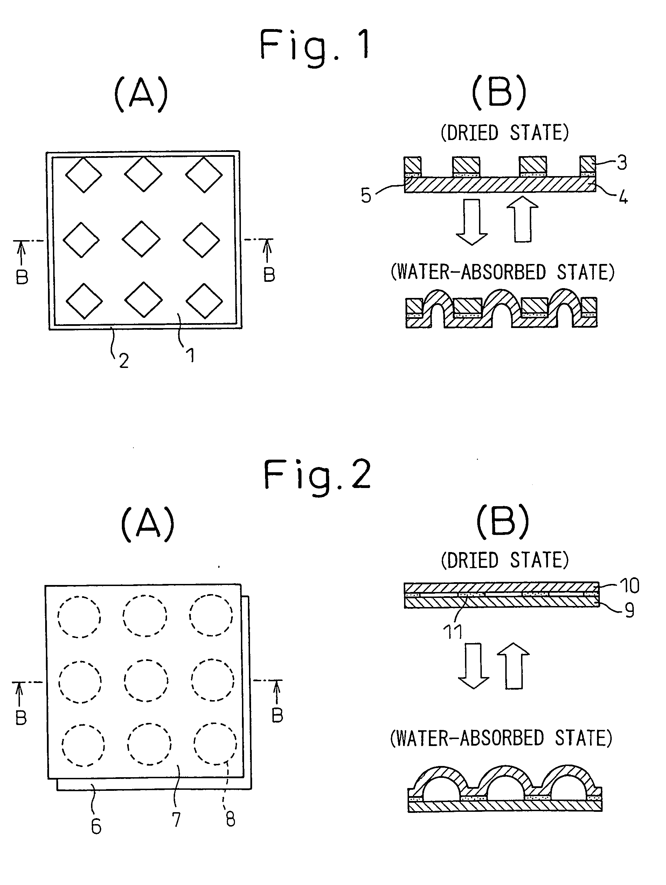

Fig. 1 shows a schematic plan view (A) and cross-sectional view (B) of an embodiment that can be applied for a composite fabric material of the invention.

Fig. 2 shows a schematic plan view (A) and cross-sectional view (B) of another embodiment that can be applied for a composite fabric material of the invention.

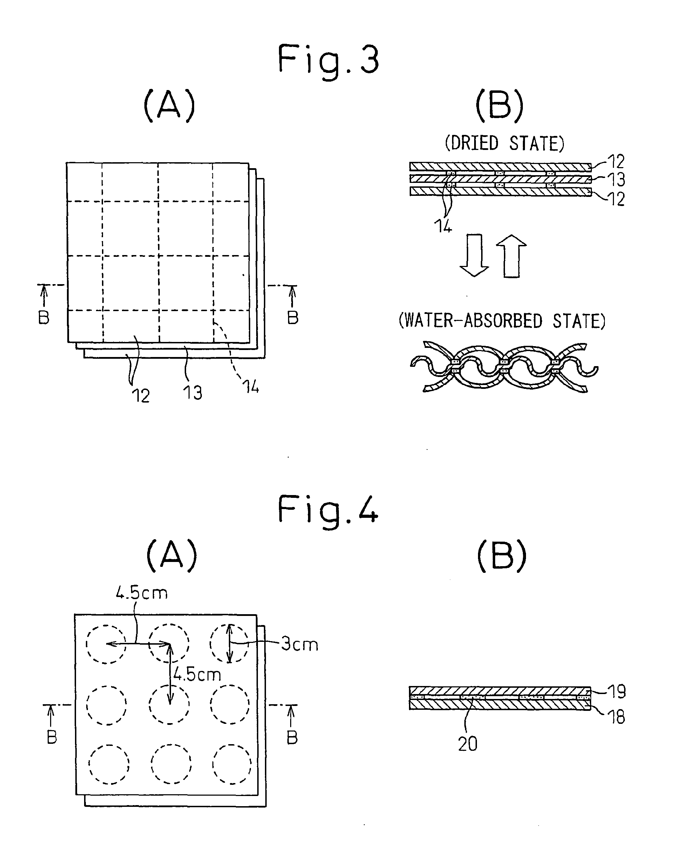

Fig. 3 shows a schematic plan view (A) and cross-sectional view (B) of still another embodiment that can be applied for a composite fabric material of the invention.

Fig. 4 shows a schematic plan view (A) and cross-sectional view (B) of a composite fabric material of the invention wherein bonded sections between area change-restricting means and a water-absorbing woven or knitted fabric and unbonded sections (circular sections) are arranged to form a prescribed pattern.

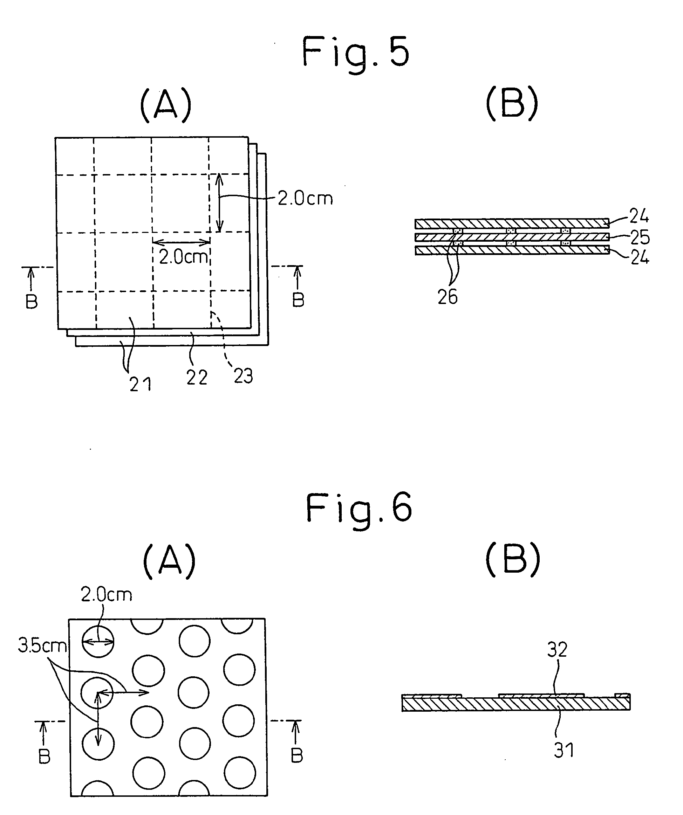

Fig. 5 shows a schematic plan view (A) and cross-sectional view (B) of a composite fabric material of the invention wherein bonded sections between area change-restricting means and a water-absorbing woven or knitted fabric and unbonded sections are arranged to form a prescribed pattern.

Fig. 6 shows a schematic plan view (A) and cross-sectional view (B) of a composite fabric material of the invention wherein attached sections between a resin coating and a water-absorbing woven or knitted fabric and non-attached sections (circular sections) are arranged to form a prescribed pattern.

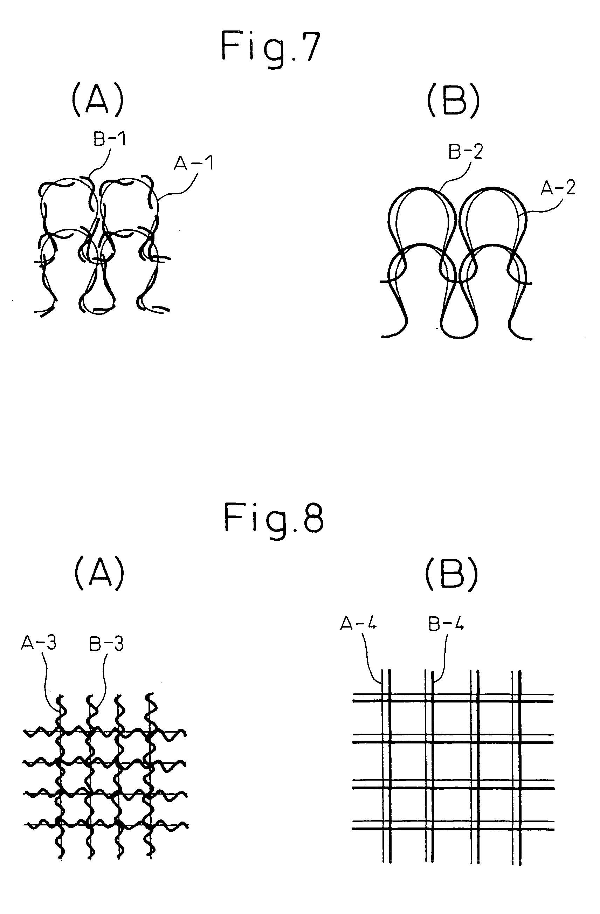

Fig. 7 shows schematic plan views of yarn arrangements wherein a yarn having high water-absorbing and self-elongating properties and yarn having low water-absorbing and self-elongating properties form composite loops in a circular knit texture, for the dry state (A) and moisture-absorbed state (B) of a circular knit that can be applied as a water-absorbing woven or knitted fabric for formation of a composite fabric material of the invention.

Fig. 8 shows schematic plan views of yarn arrangements wherein yarn having high water-absorbing and self-elongating properties and yarn having low water-absorbing and self-elongating properties constitute the warp yarn and weft yarn of a paralleled woven texture, for the dry state (A) and moisture-absorbed state (B) of a woven fabric that can be applied as a water-absorbing woven or knitted fabric for formation of a composite fabric material of the invention.

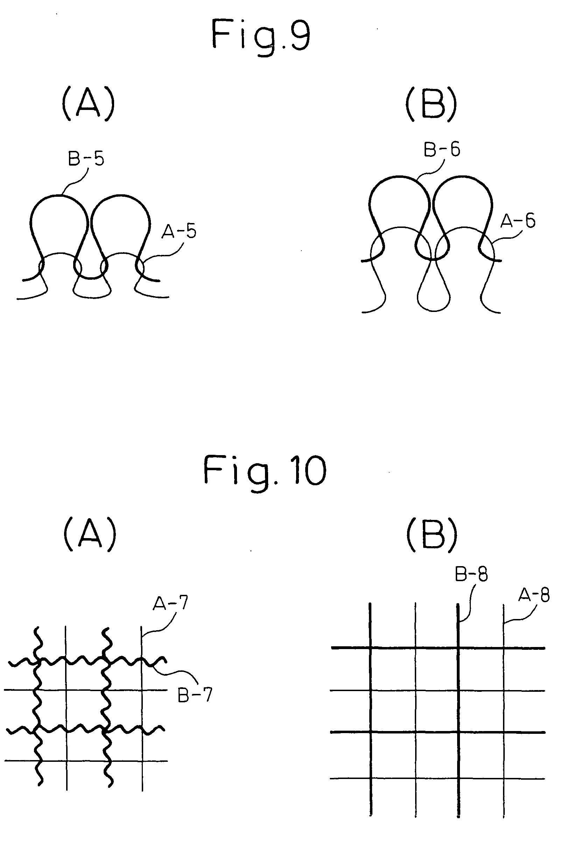

Fig. 9 shows schematic plan views of yarn arrangements wherein yarn having high water-absorbing and self-elongating properties and yarn having low water-absorbing and self-elongating properties are arranged at 1:1 to form a circular knit texture, for the dry state (A) and moisture-absorbed state (B) of a circular knit that can be applied as a water-absorbing woven or knitted fabric for formation of a composite fabric material of the invention.

Fig. 10 shows schematic plan views of yarn arrangements wherein yarn having high water-absorbing and self-elongating properties and yarn having low water-absorbing and self-elongating properties are arranged at 1:1 as the warp yarn and weft yarn forming a woven fabric, for the dry state (A) and moisture-absorbed state (B) of a woven fabric that can be applied as a water-absorbing woven or knitted fabric for formation of a composite fabric material of the invention.

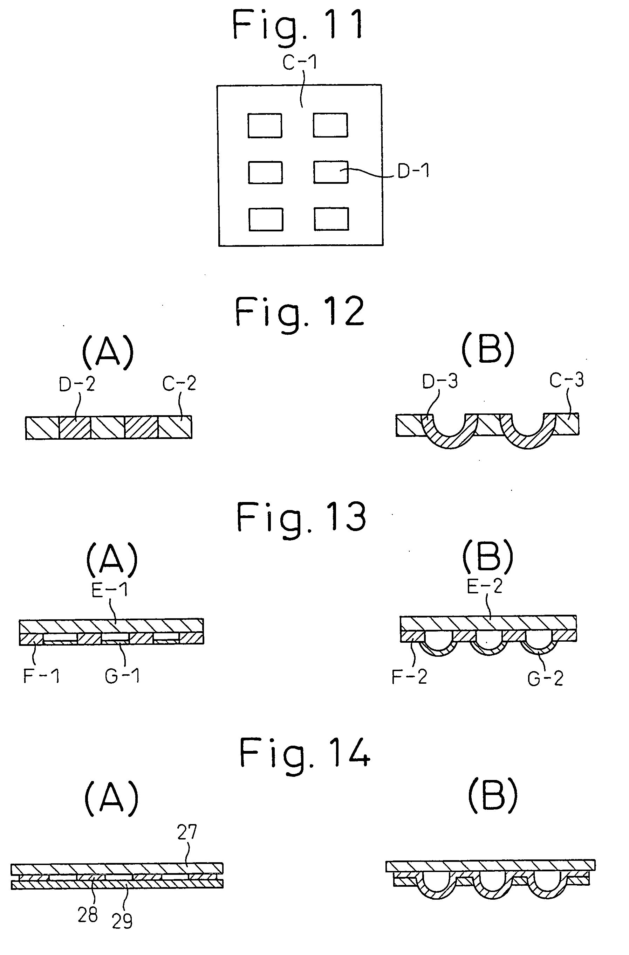

Fig. 11 shows a schematic plan view of the woven or knitted texture pattern of a woven or knitted fabric that can be applied as a water-absorbing woven or knitted fabric for formation of a composite fabric material of the invention, wherein sections composed only of yarn having low water-absorbing and self-elongating properties are arranged in a continuous lattice.

Fig. 12 shows schematic cross-sectional views in the thickness direction of a woven or knitted fabric, for the dry state (A) and moisture-absorbed state (B) of a woven or knitted fabric that can be applied as a water-absorbing woven or knitted fabric for formation of a composite fabric material of the invention, wherein the woven or knitted fabric consists of a single-layer structure, and the sections composed only of non-self-elongating yarn run continuously in the warp direction and/or weft direction.

Fig. 13 schematic cross-sectional views in the fabric thickness direction for the dry state (A) and moisture-absorbed state (B) of a woven or knitted fabric that can be applied as a water-absorbing woven or knitted fabric for formation of a composite fabric material of the invention, wherein the fabric has a bilayer structure in which one layer (X layer) is composed solely of yarn having low water-absorbing and self-elongating properties and the other layer (Y layer) is composed of yarn having high water-absorbing and self-elongating properties and yarn having low water-absorbing and self-elongating properties, and wherein the sections of the Y layer which are composed of the yarn having high water-absorbing and self-elongating properties and yarn having low water-absorbing and self-elongating properties rise from the X layer, and the non-self-elongating sections composed of the yarn having low water-absorbing and self-elongating properties are bonded to the X layer.

Fig. 14 shows cross-sectional views of a woven or knitted fabric that can be applied as a water-absorbing woven or knitted fabric for formation of a composite fabric material of the invention, in the dry state (A) and the moisture-absorbed state (B).

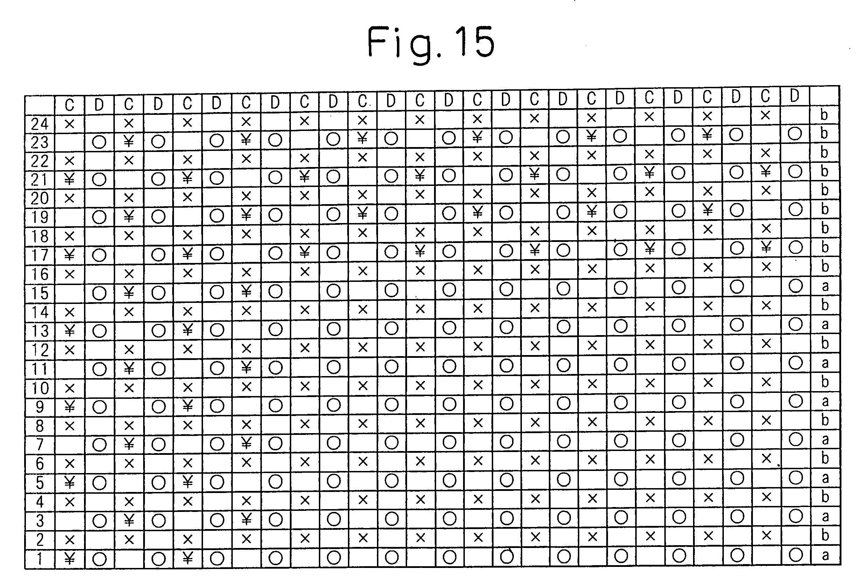

Fig. 15 is an organizational table for Example 5, wherein 1-24 is the yarn feeding sequence, C is the cylinder end, D is the dial end, a is the covering yarn, b is a polyethylene terephthalate multifilament, o is a dial knit, × is a cylinder knit and Y is a cylindrical tack.

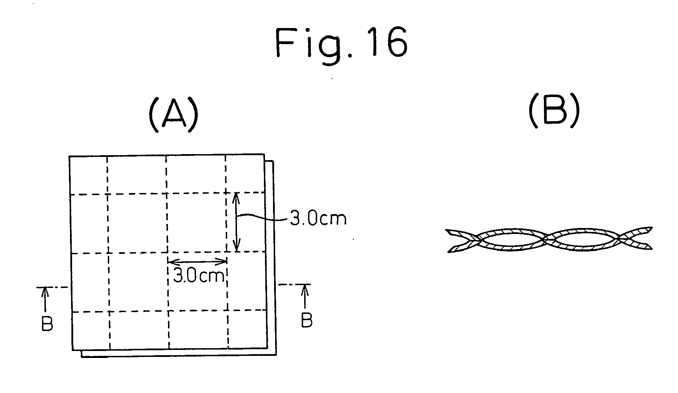

Fig. 16 shows a schematic plan view (A) and cross-sectional view (B) of a composite fabric material of the invention wherein sewn sections between area change-restricting means and a water-absorbing woven or knitted fabric and unbonded sections are arranged to form a prescribed pattern.


Best Mode for Carrying Out the Invention

Preferred modes of the invention will now be explained in detail.

The composite fabric material of the invention comprises a water-absorbing woven or knitted fabric, the area and thickness of which, or the area or thickness of which, increases by at least 10% in its water-absorbed state relative to its dried state; and an area change-restricting means composed of a woven or knitted fabric, nonwoven fabric, resin film or resin coating, the area and thickness of which does not substantially change in its water-absorbed state relative to its dried state, the area change-restricting means being bonded or sewn onto at least one side of the water-absorbing woven or knitted fabric over a partial region so as to leave a plurality of other partial regions separated from each other, or over the entire region, the means serving to restrict change in area by water absorption at the bonded or sewn portions of the water-absorbing woven or knitted fabric. The area and thickness of the water-absorbing woven or knitted fabric in its dried state are determined immediately after a test piece of the water-absorbing woven or knitted fabric is left standing in an atmosphere at a temperature at 20°C and a relative humidity at 65% for 24 hours. The area and thickness of the water-absorbing woven or knitted fabric in its water-absorbed state are determined immediately after the dry test piece surface is wetted by spraying with water until the water content of the fabric is 70 wt% relative to the weight of the test piece in its dried state. When the composite fabric material is wetted with water, the area and thickness, or the area or thickness, of the water-absorbing woven or knitted fabric at the plurality of partial regions that are separated from each other increases, thereby changing the three dimensional structure of the composite fabric material.

The following first to third modes may be mentioned as preferred modes of the invention, without being limitative.

As the first mode, shown schematically in Fig. 1, there may be mentioned a composite fabric material comprising area change-restricting means 1,3 made of a woven or knitted fabric in a mesh form and a flat water-absorbing woven or knitted fabric 2,4 bonded or sewn at bonded sections 5. In this composite fabric material, the water-absorbing woven or knitted fabric 2,4 when wetted undergoes a three-dimensional change in structure by forming protrusions through the openings in the thickness direction. When dry, it returns to the original flat state.

As the second mode, shown schematically in Fig. 2, there may be mentioned a bonded or sewn composite fabric material comprising a flat water-absorbing woven or knitted fabric 7,10 and flat area change-restricting means 6,9, having sections 11 where these are bonded or sewn together and sections 8 in which they are neither bonded nor sewn together. In this composite fabric material, the water-absorbing woven or knitted fabric undergoes a three-dimensional change in structure at the non-bonded sections which form protrusions in the thickness direction. The shape of the non-bonded sections may be a geometric pattern, image, characters or the like so that the pattern rises upon wetting, and returns to the original flat state when dry.

As the third mode, shown schematically in Fig. 3, there may be mentioned a bonded or sewn composite fabric material wherein the flat water-absorbing woven or knitted fabric 13 forms a interlayer in a trilayer structure, while flat area change-restricting means 12 form two layers on the front and back, having sections 14 where the water-absorbing woven or knitted fabric 13 and the area change-restricting means 12 are bonded or sewn together and sections where they are neither bonded nor sewn together. In this composite fabric material, the sections of the water-absorbing woven or knitted fabric 13 which are neither bonded nor sewn together form protrusions in the thickness direction, whereby the front and/or back layers which are area change-restricting means 12 are pushed out by the interlayer to produce a three-dimensional change in structure.

The water-absorbing woven or knitted fabric is not particularly restricted so long as it is a sheet whose area increases by at least 10% (preferably 20-40%) and/or whose thickness increases by at least 10% (preferably at least 20% and especially 30-200%) in its water-absorbed state relative to its dried state. That is, it must satisfy the condition whereby either or both the area and/or thickness increases by at least 10% in its water-absorbed state relative to its dried state. It is particularly preferred for the area to increase by at least 10% in its water-absorbed state relative to its dried state. As sheets whose area increases by at least 10% in their water-absorbed state relative to their dried state there are preferred the following "water absorption transforming sheet 1" and "water absorption transforming sheet 2".

Specifically, the water absorption transforming sheet 1 is a woven or knitted fabric composed of yarns with high water-absorbing and self-elongating properties and yarns with low water-absorbing and self-elongating properties, the ratio of A as the mean length of the yarns having high water-absorbing and self-elongating properties and B as the mean length of the yarns having low water-absorbing and self-elongating properties in the woven or knitted fabric in its dry state (A/B) being no greater than 0.9 (preferably 0.9-0.2 and more preferably 0.8-0.3).

The yarns with high water-absorbing and self-elongating properties and yarns with low water-absorbing and self-elongating properties are defined as follows. Specifically, a rewinding frame with a frame perimeter of 1.125 m is used for rewinding at a constant speed under a load of 0.88 mN/dtex (0.1 g/de) to produce a hank with 10 winds, and the wound yarn is allowed to stand in an environment at 20°C, 65 RH% for 24 hours, after which a load of 1.76 mN/dtex (200 mg/de) is applied in the case of non-elastic yarn or a load of 0.0088 mN/dtex (1 mg/de) is applied in the case of elastic yarn, at which time the measured yarn length (mm) is recorded as the dry yarn length. The yarn is then immersed for 5 minutes in water at a water temperature of 20°C and then lifted out of the water, after which a load of 1.76 mN/dtex (200 mg/de) is applied in the case of non-elastic yarn or a load of 0.0088 mN/dtex (1 mg/de) is applied in the case of elastic yarn similar to measurement in the dry state, at which time the measured yarn length (mm) is recorded as the wetted yarn length. Non-elastic yarn is yarn with a breaking elongation of no greater than 200%, and elastic yarn is yarn with a breaking elongation of greater than 200%. Also, yarn with high water-absorbing and self-elongating properties is defined as yarn having a swelling rate of at least 5% in the fiber axis direction, as determined by the formula shown below. Yarn with low water-absorbing and self-elongating properties is defined as yarn having a swelling rate of less than 5%.

```
Swelling rate (%) = ((wetted yarn length)-(dry yarn
length))/(dry yarn length) x 100
```

There are no particular restrictions on the yarn with high water-absorbing and self-elongating properties so long as it has the swelling rate described above, but it is preferably one with a swelling rate of 6% or greater (more preferably 8-30%).

Examples of yarns with high water-absorbing and self-elongating properties include polyetherester fibers composed of a polyetherester elastomer comprising a hard segment of polybutylene terephthalate and a soft segment of polyoxyethylene glycol, polyester fibers containing polyacrylic acid metal salts, polyacrylic acid and its copolymers, polymethacrylic acid and its copolymers, polyvinyl alcohol and its copolymers, polyacrylamide and its copolymers and polyoxyethylene-based polymers, or polyester fibers copolymerized with a 5-sulfoisophthalic acid component. Among these, polyetherester fibers composed of a polyetherester elastomer comprising a hard segment of polybutylene terephthalate and a soft segment of polyoxyethylene glycol are preferred as the yarns with high water-absorbing and self-elongating properties.

The polybutylene terephthalate preferably contains the butylene terephthalate unit at 70 mole percent or greater. The butylene terephthalate content is more preferably 80 mole percent or greater and even more preferably 90 mole percent or greater. The acid component consists mainly of terephthalic acid, but may also be copolymerized with a small amount of another dicarboxylic acid component, while the glycol component consists mainly of tetramethylene glycol but may also contain other glycol components as copolymerizing components.

As examples of dicarboxylic acids other than terephthalic acid there may be mentioned aromatic and aliphatic dicarboxylic acid components such as naphthalenedicarboxylic acid, isophthalic acid, diphenyldicarboxylic acid, diphenyloxyethanedicarboxylic acid, β-hydroxyethoxybenzoic acid, p-oxybenzoic acid, adipic acid, sebacic acid and 1,4-cyclohexanedicarboxylic acid. As copolymerizing components there may be used trifunctional or greater polycarboxylic acids such as trimellitic acid and pyromellitic acid, so long as the object of the invention is not substantially impeded.

As examples of diol components other than tetramethylene glycol there may be mentioned aliphatic, alicyclic and aromatic diol compounds such as trimethylene glycol, ethylene glycol, cyclohexane-1,4-dimethanol and neopentyl glycol. As copolymerizing components there may also be used trifunctional or greater polyols such as glycerin, trimethylolpropane and pentaerythritol, so long as the object of the invention is not substantially impeded.

The polyoxyethylene glycol preferably contains the oxyethylene glycol unit at 70 mole percent or greater. The oxyethylene glycol content is more preferably 80 mole percent or greater and even more preferably 90 mole percent or greater. Copolymerization may also be with propylene glycol, tetramethylene glycol, glycerin or the like so long as the object of the invention is not substantially impeded.

The number-average molecular weight of the polyoxyethylene glycol is preferably 400-8000 and most preferably 1000-6000.

The polyetherester elastomer may be obtained, for example, by ester exchange reaction of a starting material containing dimethyl terephthalate, tetramethylene glycol and polyoxyethylene glycol in the presence of an ester exchange catalyst to form bis(ω-hydroxybutyl) terephthalate and/or its oligomer, and then subjecting it to molten polycondensation at high temperature and reduced pressure in the presence of a polycondensation catalyst and a stabilizer.

The hard segment/soft segment ratio is preferably 30/70 to 70/30 based on weight.

The polyetherester preferably contains a publicly known organosulfonic acid metal salt in order to achieve more excellent water-absorbing and self-elongating performance.

Polyetherester fibers may be produced by melt extruding the polyetherester from an ordinary melt spinning nozzle, taking it up at a take-up speed of 300-1200 m/min (preferably 400-980 m/min), and winding it up with a winding draft of 1.0-1.2 (preferably 1.0-1.1) with respect to the take-up speed.

On the other hand, examples of yarns with low water-absorbing and self-elongating properties include natural fibers such as cotton and hemp, cellulose-based chemical fibers such as rayon and acetate, and synthetic fibers such as polyesters including polyethylene terephthalate and polytrimethylene terephthalate, polyamides, polyacrylonitrile, polypropylene and the like. Ordinary polyester fibers are preferred among these.

There are no particular restrictions on the fiber forms of the yarns with high and low water-absorbing and self-elongating properties, and they may be either staple fibers or long fibers. The cross-sectional shapes of the fibers are also not restricted, and publicly known cross-sectional shapes such as circular, triangular, flat and hollow may be employed. There are no particular restrictions on the total size, single filament size and filament count of the water-absorbing self-elongating yarn and the non-self-elongating yarn, but the preferred ranges are a total size of 30-300 dtex, a single filament size of 0.6-10 dtex and a filament count of 1-300 per yarn, from the standpoint of texture and productivity.

The water absorption transforming sheet 1 is composed of yarns with high water-absorbing and self-elongating properties and yarns with low water-absorbing and self-elongating properties. The weight ratio of these (former:latter) is preferably in the range of 10:90 to 60:40 (more preferably 20:80 to 50:50).

The structure of the woven or knitted fabric is not particularly limited in terms of woven or knitted texture or number of layers. Suitable examples include woven textures such as a plain weave, twill weave or satin weave and knitted textures such as a plain, smooth, circular rib, seed, Denbigh or tricot stitch, although these are not restrictive. The number of layers may be one for a single layer, or two or more for a multilayer structure.

The following are preferred examples of yarn arrangements of the yarn having high water-absorbing and self-elongating properties and yarn having low water-absorbing and self-elongating properties.

The first is a yarn arrangement wherein the yarn having high water-absorbing and self-elongating properties and the yarn having low water-absorbing and self-elongating properties are combined in parallel, for creation of a needle loop for knitted fabric or the warp and/or weft of a woven fabric. Examples include a yarn arrangement wherein yarn having high water-absorbing and self-elongating properties (A-1, -2) and yarn having low water-absorbing and self-elongating properties (B-1, -2) form a compound loop in a circular knit texture (two yarns simultaneously forming a needle loop; also known as a plating stitch) as shown in Fig. 7, and a yarn arrangement wherein yarn having high water-absorbing and self-elongating properties (A-3, -4) and yarn having low water-absorbing and self-elongating properties (B-3, -4) are situated in parallel as the warp and/or weft of a woven texture, as shown in Fig. 8.

The second is a yarn arrangement wherein yarn having high water-absorbing and self-elongating properties and yarn having low water-absorbing and self-elongating properties are situated alternately every yarn (1:1) or every two or more yarns (2:2, 3:3, etc.) in the warp and/or weft of a woven or knitted fabric. Examples include a yarn arrangement wherein yarn having high water-absorbing and self-elongating properties (A-5, -6) and yarn having low water-absorbing and self-elongating properties (B-5, -6) are situated at 1:1 in a circular knitted fabric as shown in Fig. 9, and a yarn arrangement wherein yarn having high water-absorbing and self-elongating properties (A-7, -8) and yarn having low water-absorbing and self-elongating properties (B-7, -8) are situated at 1:1 as warp and weft in a woven fabric, as shown in Fig. 10.

The third is a mode wherein yarn having high water-absorbing and self-elongating properties and yarn having low water-absorbing and self-elongating properties form a woven or knitted fabric as composite yarn such as combined filament yarn, combined false twisted crimped yarn, plied yarn or covering yarn.

The yarn length is measured by the following method. First, the woven or knitted fabric is allowed to stand for 24 hours in an atmosphere at a temperature of 20°C and 65% relative humidity, and a small 30 cm x 30 cm piece is cut out from the woven or knitted fabric (n=5). Next, one yarn each of the yarn having high water-absorbing and self-elongating properties and yarn having low water-absorbing and self-elongating properties is taken from the small piece and used to measure the yarn length A (mm) of the yarn having high water-absorbing and self-elongating properties and the yarn length B (mm) of the yarn having low water-absorbing and self-elongating properties. A load of 1.76 mN/dtex (200 mg/de) is applied in the case of non-elastic yarn, and a load of 0.0088 mN/dtex (1 mg/de) is applied in the case of elastic yarn. The ratio A/B is (mean value of yarn length A)/(mean value of yarn length B). The yarn having high water-absorbing and self-elongating properties and yarn having low water-absorbing and self-elongating properties which are taken from the small piece must be oriented in the same direction of the woven or knitted fabric. For example, when the yarn having high water-absorbing and self-elongating properties is removed from a warp (wale) yarn of a woven fabric, the yarn having low water-absorbing and self-elongating properties must also be taken from a warp (wale) yarn. When the yarn having high water-absorbing and self-elongating properties and yarn having low water-absorbing and self-elongating properties form the woven or knitted fabric as composite yarn, the composite yarn is taken from the cut-out small piece (30 cm x 30 cm) (n=5), and then the yarn having high water-absorbing and self-elongating properties and yarn having low water-absorbing and self-elongating properties are extracted from the composite yarn and measured in the same manner described above.

The following are examples of methods for producing differences in yarn length between the yarn having high water-absorbing and self-elongating properties and yarn having low water-absorbing and self-elongating properties.

For example, as a first method there may be mentioned one in which during weaving or knitting of the woven or knitted fabric, the aforementioned elastic polyetherester filament is used as the yarn having high water-absorbing and self-elongating properties, the polyetherester filament is doubled with yarn having low water-absorbing and self-elongating properties under a draft (stretching), and these are fed through the same feeding nozzle for weaving or knitting. The draft of the polyetherester filament is preferably 10% or greater (more preferably 20-300%). The draft (%) is determined by the following formula.

```
Draft (%) = ((take-up speed) - (feeding speed))/(feeding
speed) x 100
```

Since a polyetherester filament normally exhibits elastic performance, the length of the polyetherester filament is shortened as it undergoes elastic restoration in the woven or knitted fabric, thereby allowing a difference to be produced with respect to the yarn having low water-absorbing and self-elongating properties.

As a second method there may be mentioned one in which during weaving or knitting of the woven or knitted fabric, the boiling water shrinkage of the yarn having high water-absorbing and self-elongating properties is increased with respect to the boiling water shrinkage of the yarn having low water-absorbing and self-elongating properties. By feeding the woven or knitted fabric to an ordinary dyeing step, it is possible to shorten the yarn length of the yarn having high water-absorbing and self-elongating properties, thereby producing a difference in yarn length with the yarn having low water-absorbing and self-elongating properties.

As a third method there may be mentioned one in which the yarn having low water-absorbing and self-elongating properties is doubled with the yarn having high water-absorbing and self-elongating properties while overfeeding, to obtain composite yarn by ordinary air entangling, twisting or covering, and the composite yarn is used to weave or knit a woven or knitted fabric.

The water absorption transforming sheet 2 is a woven or knitted fabric comprising conjugated fibers composed of a polyester component and a polyamide component bonded in a side-by-side fashion and having crimps with latent crimping performance.

The polyester component is preferably a modified polyester such as polyethylene terephthalate, polypropylene terephthalate or polybutylene terephthalate, copolymerized with a compound that contains an alkali or alkaline earth metal or phosphonium salt of sulfonic acid and has one or more ester-forming functional groups, from the viewpoint of bonding with the polyamide component. Among these, modified polyethylene terephthalate copolymerized with the aforementioned compounds is especially preferred from the viewpoint of general purpose use and polymer cost. As copolymerizing components there may be mentioned 5-sodiumsulfoisophthalic acid and its ester derivatives, 5-phosphoniumisophthalic acid and its ester derivatives, and sodium p-hydroxybenzenesulfonate. Of these, 5-sodiumsulfoisophthalic acid is particularly preferred. The proportion of copolymerization is preferably within a range of 2.0-4.5 mole percent. If the proportion of copolymerization is less than 2.0 mole percent, excellent crimping performance will be exhibited but peeling may occur at the bonding interface between the polyamide component and polyester component. Conversely, if the proportion of copolymerization is greater than 4.5 mole percent, crystallization of the polyester component will proceed poorly during the hot stretching treatment, thus requiring an increased hot stretching treatment temperature and leading to more frequent yarn breakage.

The polyamide component is not particularly restricted so long as it has an amide bond in the main chain, and as examples there may be mentioned nylon-4, nylon-6, nylon-66, nylon-46 and nylon-12. Preferred among these are nylon-6 and nylon-66 from the standpoint of general purpose use, polymer cost and reeling stability.

The polyester component and polyamide component may also contain publicly known additives such as, for example, pigments, delustering agents, antifouling agents, fluorescent whiteners, flame retardants, stabilizers, antistatic agents, lightfast agents, ultraviolet absorbers and the like.

Conjugated fibers bonded in a side-by-side fashion may have any desired cross-sectional shape and composite form, as either a side-by-side type or an eccentric core-in-sheath type. A triangular or square cross-sectional shape, or hollow sections in the cross-section, may also be employed. A side-by-side form is preferred. The composite ratio of the two components may be set as desired but in most cases is preferably in the range of 30-70 to 70:30 (more preferably 40:60 to 60:40) as the weight ratio of the polyester component and polyamide component.

The single filament size and number of filaments of the conjugated fibers are not particularly restricted, but the preferred ranges are 1-10 dtex (more preferably 2-5 dtex) for the single filament size and 10-200 (more preferably 20-100) for the number of filaments.

The conjugated fibers must have a crimped structure that exhibits latent crimping performance. Conjugated fibers having different types of polymers bonded in a side-by-side fashion generally exhibit latent crimping performance which is expressed upon heat treatment carried out during dyeing or other steps. The crimped structure preferably has the polyamide component situated on the insides of the crimps and the polyester component situated on the outsides of the crimps. Conjugated fibers having such a crimped structure can be easily obtained by the production method described hereunder. When the conjugated fibers have such a crimped structure, wetting causes the polyamide component on the insides to swell and expand while the polyester component on the outsides undergo virtually no change in length, such that the percentage crimp is reduced (the apparent lengths of the conjugated fibers are increased). On the other hand, drying causes shrinkage of the polyamide component on the insides with virtually no change in length of the polyester component on the outsides, thereby increasing the percentage crimp (the apparent lengths of the conjugated fibers are decreased). Thus, since wetting causes the percentage crimp of the conjugated fibers to be reversibly decreased resulting in an increase in the apparent filament length, the dimensions of the woven or knitted fabric increase.

The conjugated fibers are preferably untwisted filaments or loosely twisted filaments with no more than 300 T/m twisting, to allow crimping to be easily reduced for increased apparent yarn lengths upon wetting. Untwisted fibers are especially preferred. Application of tight twisting as in the case of tight-twisted fibers is not preferred, as this can prevent reduction in crimping upon wetting. Optionally, air interlacing and/or ordinary false twisting-crimping may be carried out for entangling at about 20-60/m.

The woven or knitted fabric structure is not particularly limited in terms of woven or knitted texture or number of layers. Suitable examples include woven textures such as a plain weave, twill weave or satin weave and knitted textures such as a plain, smooth, circular rib, seed, Denbigh or half stitch, although these are not restrictive. A circular knit or mesh-like woven or knitted fabric is preferred.

This type of woven or knitted fabric can be easily obtained by the following production process, for example.

First, a modified polyester copolymerized with 2.0-4.5 mole percent 5-sodiumsulfoisophthalic acid, having an inherent viscosity of 0.30-0.43 (measured at 35°C with ortho-chlorophenol as the solvent) and a polyamide with an inherent viscosity of 1.0-1.4 (measured at 30°C with m-cresol as the solvent) are used for composite melt spinning in a side-by-side fashion. Here, it is particularly important for the inherent viscosity of the polyester component to be no greater than 0.43. If the inherent viscosity of the polyester component is greater than 0.43, the viscosity of the polyester component increases to an undesirable point at which the physical properties of the conjugated fiber approach those of the polyester yarn alone. Conversely, if the inherent viscosity of the polyester component is less than 0.30, the melt viscosity will be too low, resulting in reduced reeling properties and greater fluff generation and possibly reducing quality and productivity.

The spinning nozzle used for melt spinning is preferably a spinning nozzle having separated discharge openings at the high viscosity end and low viscosity end and a reduced discharge line speed at the high viscosity end (increased discharge cross-sectional area), as shown in Fig. 1 of Japanese Unexamined Patent Publication No. 2000-144518. Preferably, the molten polyester is passed through the high viscosity end discharge opening and the molten polyamide is passed through the low viscosity end discharge opening, and cooling is to solidification. As mentioned above, the weight ratio of the polyester component and polyamide component is preferably in the range of 30:70 to 70:30 (more preferably 40:60 to 60:40).

After composite melt spinning, a separate stretching system may be employed for stretching of the wound up filament, or a direct stretching system may be employed for hot stretching treatment without winding. The spinning and stretching conditions may be ordinary conditions. For example, in the case of a direct stretching system, spinning is carried out at a spinning speed of about 1000-3500 m/min, and followed continuously by stretching and winding at a temperature of 100-150°C. The draw ratio is appropriately set so that the finally obtained conjugated fiber has a breaking elongation of 10-60% (preferably 20-45%), and a tensile strength of about 3.0-4.7 cN/dtex.

The conjugated fibers preferably satisfy the following conditions (1) and (2).

> (1) The dry percentage crimp DC of the dried conjugated fibers is in the range of 1.5-13% (preferably 2-6%).
> (2) The difference between the dry percentage crimp DC and wet percentage crimp HC of the wet conjugated fibers (DC-HC) is 0.5% or greater (preferably 1-5%).

The "dried" state is the state of the sample after standing for 24 hours in an environment at a temperature of 20°C and a relative humidity of 65% RH while the "wet" state is the state of the sample immediately after immersion for 2 hours in water at a temperature of 20°C; the dry percentage crimp DC and wet percentage crimp HC are the values measured by the following methods.

First, a wind-up frame with a circumference of 1.125 m is used for rewinding under a load of 49/50 mN x 9 x total tex (0.1 gf x total denier) at a fixed speed for 10 winds to produce a small skein, the small skein is twisted into a double ring and placed in boiling water while subjected to an initial load of 49/2500 mN x 20 x 9 x total tex (2 mg x 20 x total denier) for 30 minutes of treatment, after which it is dried for 30 minutes with a drier at 100°C and then placed in dry heat at 160°C while subjected to the initial load for 5 minutes of treatment. The initial load is removed after the dry heat treatment, and after standing for at least 24 hours in an environment at a temperature of 20°C, 65% RH, the initial load and 98/50 mN x 20 x 9 x total tex (0.2 gf x 20 x total denier) double load are applied, the skein length L0 is measured, the double load alone is immediately removed, and the skein length L1 one minute after removing the load is measured. The skein is then immersed for 2 hours in water at a temperature of 20°C while under the initial load, and after removal and lightly wiping off the water with filter paper under a pressure of 0.69 mN/cm$^2$ (70 mgf/cm$^2$), it is subjected to the initial load and the double load, the skein length L0' is measured, the double load alone is immediately removed, and the skein length L1' one minute after removing the load is measured. These measured values are inserted into the following formula to calculate the dry percentage crimp (DC), wet percentage crimp (HC) and the difference in dry and wet percentage crimps (DC-HC).

$$\texttt{Dry percentage crimp DC(\%) = ((L0-L1)/L0) x 100}$$

$$\texttt{Wet percentage crimp HC(\%) = ((L0'-L1')/L0') x 100}$$

The wet percentage crimp HC of the conjugated fiber is preferably in the range of 0.5-10.0% (more preferably 1-3%).

When the dry percentage crimp of the conjugated fiber is smaller than 1.5%, the change in percentage crimp when wet may be reduced. Conversely, when the dry percentage crimp of the conjugated fiber is greater than 13%, crimping is strong enough to inhibit change in crimping when wet.

After weaving or knitting a woven or knitted fabric either using the conjugated fiber alone or simultaneously with other fibers, the fabric may be subjected to dyeing treatment or other heat treatment to express latent crimping of the conjugated fiber.

For weaving or knitting of the woven or knitted fabric, it is essential for the conjugated fiber to constitute 10 wt% or greater (preferably 40 wt% or greater) of the total weight of the woven or knitted fabric. There are no particular restrictions on the woven or knitted fabric texture, and any of those mentioned above may be used as appropriate.

The temperature for dyeing treatment is preferably 100-140°C (more preferably 110-135°C), and the dyeing time is preferably in the range of 5-40 minutes as the keep time at the top temperature. Dyeing of the woven or knitted fabric under these conditions will allow the conjugated fibers to express crimping by the heat shrinkage difference between the polyester component and the polyamide component. Selecting the polyester component and polyamide component from among the aforementioned polymers will form a crimped structure with the polyamide component situated on the insides of the crimps.

The woven or knitted fabric which has been dyed is usually subjected to final dry heat setting. The temperature of the final dry heat setting is preferably 120-200°C (more preferably 140-180°C), and the final setting time is preferably in the range of 1-3 minutes. If the temperature for the final dry heat setting is below 120°C, wrinkles created during the dyeing will tend to remain, and the dimensional stability of the finished product may be impaired. Conversely, if the temperature for the final dry heat setting is higher than 200°C, crimping of the conjugated fibers during dyeing will be reduced and the fibers may harden and produce a hard feel to the cloth.

The woven or knitted fabric is preferably subjected to hygroscopic treatment. Hygroscopic treatment of the woven or knitted fabric can help improve the air permeability even with low amounts of perspiration. The type of hygroscopic treatment is not particularly restricted, and a preferred example is adhesion of a hygroscopic treatment agent such as polyethyleneglycol diacrylate or its derivative, or polyethylene terephthalate-polyethylene glycol copolymer, to the woven or knitted fabric at 0.25-0.50% with respect to the weight of the fabric. Examples of hygroscopic treatment methods include a bath treatment method in which the hygroscopic treatment agent is mixed with the dyeing solution during dyeing, and coating treatment methods such as gravure coating or screen printing wherein the woven or knitted fabric is dipped in a hygroscopic treatment solution and squeezed with a mangle.

The water absorption transforming sheet 3, water absorption transforming sheet 4 and water absorption transforming sheet 5 described hereunder are preferred as sheets having a thickness which increases by at least 10% in its water-absorbed state relative to its dried state. The thickness of a woven or knitted fabric according to the invention is the maximum thickness of the woven or knitted fabric (the vertical distance from the top edge to the bottom edge).

Specifically, the water absorption transforming sheet 3 is a woven or knitted fabric with a single-layer structure, and if the yarn having high water-absorbing and self-elongating properties and yarn having low water-absorbing and self-elongating properties are arranged with a section C-1 composed only of the yarn having low water-absorbing and self-elongating properties forms a continuous lattice shape and sections D-1 composed of the yarn having high water-absorbing and self-elongating properties and yarn having low water-absorbing and self-elongating properties, in a raised island woven or knitted texture pattern as shown schematically in Fig. 11, the cross-sectional shape in the direction of thickness of the dried woven or knitted fabric will be flat as shown in Fig. 12(A), but upon wetting, the sections D-3 composed of the yarn having high water-absorbing and self-elongating properties and yarn having low water-absorbing and self-elongating properties will elongate, producing protrusions (i.e., the thickness will increase).

The water absorption transforming sheet 4 is a woven or knitted fabric with a multilayer structure, and as shown by the cross-section in the thickness direction of the woven or knitted fabric in Fig. 13(A), one layer (X layer) E-1 is composed only of yarn having low water-absorbing and self-elongating properties while the other layer (Y layer) is composed of yarn having high water-absorbing and self-elongating properties and yarn having low water-absorbing and self-elongating properties, wherein in the Y layer, sections G-1 composed of yarn having high water-absorbing and self-elongating properties and yarn having low water-absorbing and self-elongating properties rise above the X layer, and non-self-elongating sections F-1 composed of the yarn having low water-absorbing and self-elongating properties are bonded to the X layer, such that upon wetting, the sections G-2 composed of the yarn having high water-absorbing and self-elongating properties and yarn having low water-absorbing and self-elongating properties in the Y layer are elongated to form protrusions, resulting in an increased thickness, as shown in Fig. 13(B).

The water absorption transforming sheet 5 comprises a layer 29 composed only of the aforementioned conjugated fibers and a layer 27 composed only of ordinary fibers, with both layers bonded at the sections 28, as shown in Fig. 14. Upon wetting, protrusions are formed resulting in an increase thickness, as shown in Fig. 14(B).

The area change-restricting means of the composite fabric material of the invention comprises a woven or knitted fabric, nonwoven fabric, resin film or resin coating that undergoes substantially no change in area or thickness in the moisture-absorbed state compared to the dry state. Here, "undergoes substantially no change in area or thickness" means that the proportion of change in area and the proportion of change in thickness in the moisture-absorbed state compared to the dry state is no greater than 3% (preferably no greater than 2%).

Ordinary woven or knitted fabrics made of ordinary fibers known in the prior art may be used as the aforementioned woven or knitted fabric. The fibers may be selected from among organic natural fibers such as cotton, wool and hemp, organic synthetic fibers such as polyester, nylon and polyolefin fibers, organic semisynthetic fibers such as cellulose acetate fibers, and organic regenerated fibers such as viscose rayon fibers, although there is no restriction to these.

Among such fibers, polyester fibers are preferred from the standpoint of fiber strength and manageability. Polyester fibers are produced from a dicarboxylic acid component and a diglycol component. Preferably, the dicarboxylic component consists primarily of terephthalic acid, and the diglycol component consists primarily of one or more alkylene glycols selected from among ethylene glycol, trimethylene glycol and tetramethylene glycol. The polyester may also contain a third component in addition to the dicarboxylic acid and glycol components. As third components there may be used one or more from among cationic dyeable anion components such as sodiumsulfoisophthalic acid, dicarboxylic acids other than terephthalic acid such as isophthalic acid, naphthalenedicarboxylic acid, adipic acid and sebacic acid, and glycol compounds other than alkylene glycols such as diethylene glycol, polyethylene glycol, bisphenol A and bisphenolsulfone.

Such fibers may, if necessary, also contain one or more from among delustering agents (titanium dioxide), pore-forming agents (organic metal sulfonates), anticoloration agents, thermal stabilizers, flame retardants (diantimony trioxide), fluorescent whiteners, coloring pigments, antistatic agents (metal sulfonates), humectants (polyoxyalkylene glycols), antimicrobial agents and inorganic particles.

There are no particular restrictions on the forms of the fibers, which may be long fibers (multifilaments) or staple fibers, but long fibers are preferred to obtain a soft feel. In addition, they may be subjected to ordinary false twisting, twisting or air interlacing. The sizes of the fibers are also not restricted, but preferably from the standpoint of obtaining a soft feel the single filament size is 0.1-3 dtex, the number of filaments is 20-150 and the total fiber size is 30-300 dtex. The cross-sectional shapes of the single filaments are also not restricted, and they may have ordinary circular, or triangular, flat, cross-shaped, hexagonal or hollow cross-sectional shapes.

The texture of the woven or knitted fabric forming the area change-restricting means is not particularly restricted, and may be an ordinary type of texture. Examples of woven fabric textures include three-foundation weaves such as plain weave, twill weave and satin weave, derivative weaves such as simple derivative weave and partial backed weaves such as warp backed weave and weft backed weave, and warp velvet weave. The knit type may be a weft knit or warp knit. Examples of preferred weft knits include plain stitch, rib stitch, interlock stitch, pearl stitch, tack stitch, float stitch, half cardigan stitch, lace stitch and plating stitch, and examples of preferred warp stitches include single Denbigh stitch, single atlas stitch, double cord stitch, half tricot stitch, lined stitch and Jacquard stitch.

The method for attaching the two or more sheets in the composite fabric material of the invention is not particularly restricted, and there may be mentioned a method of heat fusing the directly stacked sheets, a method of fusing after inserting a urethane foam or low-melting-point nylon nonwoven fabric between the sheets, and a method of adhesion using an acrylic-based, urethane-based, polyester-based or fusible powder-type adhesive. The method of adhesion using an adhesive may employ any suitable means such as a doctor system, roller system, reciprocal system, spray system or the like.

The composite fabric material of the invention may be a material wherein the area change-restricting means is a resin coated layer the area and thickness of which does not substantially change in its water-absorbed state relative to its dried state, attached over a partial region so as to leave a plurality of other partial regions separated from each other on at least one side of the water-absorbing woven or knitted fabric. When wetted, the plurality of partial regions where the resin is not attached undergo a three-dimensional change in structure as protrusions in the thickness direction.

The resin attachment pattern is most preferably a pattern wherein unattached sections are distributed in an island fashion, as shown in Fig. 6. Alternatively, the attached sections 32 may be continuously connected in only one direction as stripes, or the attached sections may be arranged in a horizontal/vertical or slanted lattice form.

Examples of resins include acrylic-based resins, urethane-based resins, polyester-based resins, silicone-based resins, vinyl chloride-based resins and nylon-based resins.

The resin adhesion coverage is preferably in the range of 0.01-40 g/m$^2$ (more preferably 5-30 g/m$^2$) with respect to the fabric, in terms of solid weight of the resin.

The adhered section area ratio in the pattern is preferably 10-90% (more preferably 25-70%). The adhered section area ratio is represented by the following formula.

$$\text{Adhered section area ratio} = \text{(adhered section area)}/\text{(adhered section area + non-adhered section area)} \times 100(\%)$$

The method of adhering the resin to the water-absorbing woven or knitted fabric may be an ordinary method in which an aqueous dispersion of the resin is adhered by gravure coating or screen printing, and then dried.

Before and/or after attachment, or before and/or after adhesion of the resin, the fabric may be subjected to the aforementioned dyeing and hygroscopic treatment, as well as ordinary fiber raising treatment, ultraviolet blocking treatment or treatments for various functions using antimicrobial agents, deodorants, insecticides, luminous agents, retroreflective agents, minus ion generators, water-repellent agents and the like.

At sections of the composite fabric material of the invention where the water-absorbing woven or knitted fabric and the area change-restricting means are not bonded, knitted or adhered, the water-absorbing woven or knitted fabric deforms into protrusions upon water absorption, thereby increasing in thickness or increasing in air permeability. The thickness preferably increases by at least 10% (more preferably 20-200%) in its water-absorbed state relative to its dried state. The air permeability also preferably increases by at least 10% (more preferably 20-200%) in its water-absorbed state relative to its dried state.

The composite fabric material may be used for various fiber products including outer clothing, sportswear, inner clothing, shoe materials, medical and sanitary supplies such as diapers and nursing sheets, bedclothes and beddings, upholstery materials of chairs and sofas, carpets, car seat fabrics and interior articles, for reduced stickiness, mustiness and coldness.

Examples

The present invention will now be explained in greater detail by examples, with the understanding that the invention is in no way limited by the examples. The physical properties mentioned in the examples were measured by the following methods.

<Air permeability change>

The dry air permeability (cc/cm$^2$/s) and wet air permeability (cc/cm$^2$/s) were measured according to JIS L 1096-1998,6.27.1,A (Frajour type air permeability testing method). Each air permeability was measured (n=5) defining "dry" as the state of the sample after standing in an environment at a temperature at 20°C and a relative humidity at 65% for 24 hours, and "wet" as the state of the sample after spraying with water to a moisture content of 70%, and averages were calculated. The air permeability change was determined by the following formula.

$$\text{Air permeability change (\%) = ((wet air permeability) - (dry air permeability))/(dry air permeability) x 100}$$

<Area change>

After allowing the sample to stand in an environment at a temperature at 20°C and a relative humidity at 65% for 24 hours, a small piece (20 cm length x 20 cm width square) was cut out in the same direction as the sample, and defined as the dry area (cm$^2$). The small piece was then sprayed with water to a moisture content of 70%, after which the area of the small piece was measured and defined as the wet area (cm$^2$). The area change (%) was calculated as the area change according to the following formula.

$$\text{Area change (\%) = ((wet area)-(dry area))/(dry area) x 100}$$

<Thickness change>

After allowing the sample to stand in an atmosphere at a temperature at 20°C and a relative humidity at 65% for 24 hours, a small 10 cm x 10 cm piece was cut out from the sample (n=5). Next, the sample was placed on a flat board and subjected to a pressure load of 0.13 cN/cm$^2$ (0.13 g/cm$^2$), and the sample thickness TD was measured using a Digimatic Height Gauge (HDS-HC) by Mitutoyo.
The small piece was then sprayed with water to a moisture content of 70%, and after one minute had passed, the thickness TW of the wetted portion was measured under a pressure load of 0.13 cN/cm$^2$ (0.13 g/cm$^2$) in the same manner as before. The thickness change was calculated by the following formula based on the measured values.

$$\text{Thickness change (\%) = (TW-TD)/TD x 100}$$

<Boiling water shrinkage>

The boiling water shrinkage (hot water shrinkage) (%) was measured (n=3) by the method of JIS L 1013-1998,7.15.

<Yarn length measurement>

The woven or knitted fabric was allowed to stand in an atmosphere at a temperature at 20°C and a relative humidity at 65% for 24 hours, and a small 30 cm x 30 cm piece was cut out with the same warp and weft directions as the woven or knitted fabric (n=5). Next, one filament each of the yarn having high water-absorbing and self-elongating properties and yarn having low water-absorbing and self-elongating properties was removed from the small piece, and then the yarn having high water-absorbing and self-elongating properties as the elastic yarn was subjected to a load of 0.0088 mN/dtex (1 mg/de) and the yarn having low water-absorbing and self-elongating properties as the non-elastic yarn was subjected to a load of 1.76 mN/dtex (200 mg/de), after which the yarn length A (mm) of the yarn having high water-absorbing and self-elongating properties and the yarn length B (mm) of the yarn having low water-absorbing and self-elongating properties were measured. The ratio A/B was determined as (average value of yarn length A)/(average value of yarn length B).

Example 1

A polyetherester comprising a hard segment of polybutylene terephthalate (49.8 parts by weight) and a soft segment of polyoxyethylene glycol with a number-average molecular weight of 4000 (50.2 parts by weight) was melted at 230°C and extruded through a prescribed spinning nozzle at a discharge rate of 3.05 g/min. The polymer was taken up between two godet rollers at 705 m/min and then wound up at 750 m/min (wind-up draft: 1.06), to obtain a 44 dtex/filament elastic yarn having high water-absorbing and self-elongating properties. The swelling rate of the wetted water-absorbing and self-elongating yarn in the fiber axis direction was 10%, and the boiling water shrinkage was 8%.
As yarn having low water-absorbing and self-elongating properties there was also prepared an ordinary polyethylene terephthalate multifilament yarn (84 dtex/24 filament) having a boiling water shrinkage of 10% and a wetted swelling rate of no greater than 1%.
Next, a 28 gauge single circular knitting machine was used for feeding of the yarn having high water-absorbing and self-elongating properties simultaneously with the yarn having low water-absorbing and self-elongating properties while pulling at a draw ratio of 2.7, to produce a single Jersey circular knitted fabric with a knit density of 81 course/2.54 cm, 37 wale/2.54 cm.
The circular knitted fabric was then dyed by an ordinary dye finishing procedure to obtain a circular knitted fabric with improved wet air permeability. The obtained circular knitted fabric comprised the yarn having high water-absorbing and self-elongating properties and yarn having low water-absorbing and self-elongating properties in a circular knit structure with composite loops, at an A/B ratio of 0.54. The knitted fabric had a dry air permeability of 52 cc/cm$^2$/s and a wet air permeability of 109 cc/cm$^2$/s (air permeability change of 110%), and thus exhibited significantly improved air permeability when wet.
Moreover, the area change of the knitted fabric was 22% (11% warp, 10% weft) and the thickness change was -3% thus indicating a significant change in area when wet, and therefore the knitted fabric was used as a water-absorbing fabric.
The polyester multifilament yarn (84 dtex/36 filament) was then full-set on a back reed in a 28 gauge tricot knitting machine, while the same yarn as on the back reed was set on the middle reed at 3 in-3 out and the same yarn as on the back reed was set on the front reed at 3 out-3 in, for knitting of a mesh-knitted fabric with a knit texture of back: 01-10, middle: (10-34)x2 (67-43)x2, front: (67-43)x2 (10-34)x2, with knitting conditions on the machine of 21 courses/inch. The knitted fabric was then subjected to an ordinary dye finishing procedure. The area change between the dry and wet states of the knitted fabric was 0.1% while the thickness change was no greater than 0.1%, and therefore the fabric was used as the area change-restricting means.
Next, the obtained water-absorbing knitted fabric and area change-restricting means were bonded together. First, a commercially available iron-bonded sheet (low-melting-point nylon nonwoven fabric, product of Cando) was cut out to one wind larger than the area change-restricting means with the mesh structure, these were stacked and contact bonded with an iron set to 130°C, and after thoroughly cooling the fabric, the adhesive sheet was peeled by turning.
The adhesive sheet was left only on the sections of contact between the area change-restricting means and adhesive sheet. The water-absorbing knitted fabric was stacked onto the adhesive-adhered area change-restricting means obtained in the manner described above, and contact bonding with an iron set to 130°C as before resulted in a bilayer laminated structure comprising the water-absorbing knitted fabric and the area change-restricting means.
The evaluation results for the obtained bilayer structure are shown in Table 1 and demonstrate that it was satisfactory with 33% improvement in thickness and 29% improvement in air permeability upon wetting.

Example 2

A polyester multifilament yarn (22 dtex/1 filament) was full-set on the back reed in a 36 gauge tricot knitting machine, while the same yarn as on the back reed was full-set on the front reed, for knitting of a knitted fabric with a double Denbigh knit texture of back: 10-12, front: 12-10, with knitting conditions of 100 courses/inch on the machine. The knitted fabric was then subjected to an ordinary dye finishing procedure. The dimensional change between the dry and wet states of the knitted fabric was 0.0% warp, 0.0% weft and no greater than 0.1% thickness change, and therefore the fabric was used as the area change-restricting means. The Jersey stitch fabric used as the water-absorbing fabric in Example 1 was also used as the water-absorbing fabric in this example.
Next, the area change-restricting means 18 and water-absorbing fabric 19 were bonded with an adhesive 20, also forming bilayer non-bonded circular sections with a diameter of 3 cm and center distances of 4.5 cm, in a pattern arranged in the warp and weft directions (see Fig. 4).
The evaluation results for the obtained bilayer structure are shown in Table 1 and show that water absorption caused the bilayer non-bonded sections to rise three-dimensionally (the non-bonded sections, being circular, formed hemispheric raised areas), with 292% change in thickness and 33% improvement in air permeability, and therefore the composite fabric material had undergone a satisfactory three-dimensional change in structure upon water absorption as intended for the present invention.

Example 3

The water-absorbing fabric and area change-restricting means used in Example 2 were used to form a trilayer structure with the water-absorbing fabric 22,25 as the interlayer between area change-restricting means 21,24 on the front and back, the three layers being bonded with an adhesive 26 in a 2 cm square lattice pattern with 3 mm lattice width (see Fig. 5).

The evaluation results for the obtained trilayer structure are shown in Table 1 and show that water absorption caused the trilayer non-bonded sections to rise three-dimensionally (the sections within the lattice), resulting in 120% change in thickness and 50% improvement in air permeability, and therefore the composite fabric material had undergone a satisfactory three-dimensional change in structure upon water absorption as intended for the present invention.

Example 4

Using the water-absorbing fabric and area change-restricting means used in Example 2, the water-absorbing fabric and area change-restricting means were sewn together to form a lattice-like pattern with a sewn yarn pitch of 3 cm in the warp and weft directions (see Fig. 16).

The evaluation results for the obtained bilayer structure are shown in Table 1 and show that water absorption caused the non-sewn sections of the bilayer to rise three-dimensionally (the sections within the lattice), resulting in 282% change in thickness and 53% improvement in air permeability, and therefore the composite fabric material had undergone a satisfactory three-dimensional change in structure upon water absorption as intended for the present invention.

Example 5

The same yarn having low water-absorbing and self-elongating properties which was used in Example 1 was used as core yarn, and a polyethylene terephthalate multifilament yarn (33 dtex/12 filament) having a boiling water shrinkage of 10% and a wetted swelling rate of no greater than 1% was used as sheath yarn, to obtain a covering yarn (composite yarn) with a core yarn draft of 30% (1.3) and sheath covering at 350/m (Z direction). The covering yarn and a polyethylene terephthalate multifilament yarn b (84 dtex/72 filament) having a boiling water shrinkage of 8% and a wetted swelling rate of no greater than 1% were knitted into a knitted fabric having the knitted texture shown in Fig. 15 at a knitting density of 38 course/2.54 cm, 32 wale/2.54 cm in a 24 gauge double circular knitting machine, and the fabric was subjected to an ordinary dye finishing procedure. The A/B ratio of the knitted fabric was 0.8.

In this knitted fabric, as seen by the cross-section in the thickness direction shown in Fig. 12(1), the first layer (X layer) was composed only of the yarn having low water-absorbing and self-elongating properties (polyethylene terephthalate multifilament yarn b) while the sections of the other layer (Y layer) which were composed of the covering yarn a (yarn having high water-absorbing and self-elongating properties and yarn having low water-absorbing and self-elongating properties) rose over the X layer, the non-self-elongating sections being bonded to the X layer. The non-self-elongating sections of the Y layer were connected at a width of about 7 mm in the weft direction. This knitted fabric had a void percentage of 8%, an air permeability of 180 $cc/cm^2/s$ and a thickness of 0.90 mm when dry while the fabric dimensions were unchanged when wet, and therefore as shown in Fig. 12(2), the sections composed of the yarn having high water-absorbing and self-elongating properties and yarn having low water-absorbing and self-elongating properties formed protrusions, with a void percentage of 10% (void change of 25%), an air permeability of 240 $cc/cm^2/s$ (air permeability change of 33%) and a thickness of 1.60 mm (thickness change of 78%).

Next, the knitted fabric was used as a water-absorbing fabric to obtain a bilayer structure in the same manner as Example 1. The evaluation results for the obtained bilayer structure are shown in Table 1 and demonstrate that it was satisfactory with 50% improvement in thickness and 5% improvement in air permeability upon wetting.

Comparative Example 1

A nylon multifilament yarn (84 dtex/24 filament) was full-set on the back reed and front reed in a 28 gauge tricot knitting machine, for knitting of a knitted fabric with a double half-knit texture of back: 10-12, front: 23-10, with knitting conditions of 80 courses/inch on the machine. The knitted fabric was then subjected to an ordinary dye finishing procedure. The dimensional change between the dry and wet states of the knitted fabric was 4% (1.3% warp, 2.7% weft) and the thickness change was - 2%; this fabric was therefore used as the water-absorbing fabric.

The tricot knitted fabric used in Example 2 was used as the area change-restricting means and the area change-restricting means was bonded with the aforementioned water-absorbing fabric in the same manner as Example 2 to prepare a bilayer structure.

The evaluation results for the obtained bilayer structure are shown in Table 1, and demonstrate that it was unsatisfactory with only 7% improvement in thickness and only 8% improvement in air permeability upon wetting.

Table 1

| | | Example 1 | Example 2 | Example 3 | Example 4 | Example 5 | Comp. Ex. 1 |
|---|---|---|---|---|---|---|---|
| Air permeability [cc/cm$^2$/s] | Dry | 49 | 36 | 30 | 45 | 105 | 60 |
| | Wet | 63 | 48 | 45 | 69 | 110 | 65 |
| | Change [%] | 29 | 33 | 50 | 53 | 5 | 8 |
| Thickness [mm] | Dry | 0.90 | 1.04 | 1.18 | 1.02 | 1.40 | 1.20 |
| | Wet | 1.20 | 4.08 | 2.60 | 3.90 | 2.10 | 1.28 |
| | Change [%] | 33 | 292 | 120 | 282 | 50 | 7 |

Example 6

A polyetherester comprising a hard segment of polybutylene terephthalate (49.8 parts by weight) and a soft segment of polyoxyethylene glycol with a number-average molecular weight of 4000 (50.2 parts by weight) was melted at 230°C and extruded through a prescribed spinning nozzle at a discharge rate of 3.05 g/min. The polymer was taken up between two godet rollers at 705 m/min and then wound up at 750 m/min (wind-up draft: 1.06), to obtain a 44 dtex/filament elastic yarn having high water-absorbing and self-elongating properties. The swelling rate of the wetted high water-absorbing and self-elongating yarn in the fiber axis direction was 10%, and the boiling water shrinkage was 8%.

As yarn having low water-absorbing and self-elongating properties there was also prepared an ordinary polyethylene terephthalate multifilament yarn (84 dtex/24 filament) having a boiling water shrinkage of 10% and a wetted swelling rate of no greater than 1%.

Next, a 28 gauge single circular knitting machine was used for feeding of the yarn having high water-absorbing and self-elongating properties simultaneously with the yarn having low water-absorbing and self-elongating properties while pulling the former at a draw ratio of 2.7, to produce a single Jersey circular knitted fabric with a knit density of 81 course/2.54 cm, 37 wale/2.54 cm. The circular knitted fabric was then dyed by an ordinary dye finishing procedure to obtain a circular knitted fabric with improved wet air permeability. The obtained knitted fabric had a dry air permeability of 52 cc/cm$^2$/s and a wet air permeability of 109 cc/cm$^2$/s (air permeability change of 110%), and thus exhibited significantly improved air permeability when wet.

Moreover, the dimensional change in the knitted fabric when dry and when wet was 22% (11% warp, 10% weft), and therefore the knitted fabric was used as a water-absorbing fabric.

Next, an acrylic resin was adhered onto the surface of the water-absorbing fabric by the gravure roll method to an adhesion coverage of 20 g/m$^2$, in the pattern shown in Fig. 6 (adhesion area proportion: 64%).

The evaluation results for the obtained fabric are shown in Table 1 and demonstrate that the non-adhered sections (SN regions) rose three-dimensionally upon wetting with water (the SN regions, being circular, formed hemispheric raised areas), with 365% change in thickness and 54% improvement in air permeability, and therefore the composite fabric material had undergone a satisfactory three-dimensional change in structure upon water absorption as intended for the present invention.

Comparative Example 2

The circular knitted fabric used in Example 1 was used as the water-absorbing fabric and the same resin was used as in Example 1 for coating to an adhesion coverage of 40 g/m$^2$ over the entire surface of the water-absorbing fabric.

The evaluation results for the obtained coated fabric are shown in Table 1 and demonstrate that the fabric was unsatisfactory with only 4% improvement in thickness and 11% reduction in air permeability upon water absorption.

Table 2

|  |  | Example 6 | Comp. Ex. 2 |
|---|---|---|---|
| Air permeability [cc/cm$^2$/s] | Dry | 28 | 19 |
|  | Wet | 43 | 17 |
|  | Change [%] | 54 | -11 |
| Thickness [mm] | Dry | 0.49 | 0.50 |
|  | Wet | 2.28 | 0.52 |
|  | Change [%] | 365 | 4 |

Industrial Applicability

According to the present invention, a composite fabric material comprising two or more sheets attached or sewn together exhibits irregularities on the structure surface, increased thickness or improved air permeability upon wetting with water, and because the composite fabric material and its textile products thus undergo a three-dimensional change in structure by water wetting, thereby reducing feelings of stickiness, mustiness and coldness, their industrial value is high.


**Claims**

1. A composite fabric material comprising a water-absorbing woven or knitted fabric, the area and thickness of which, or the area or thickness of which, increases by at least 10% in its water-absorbed state relative to its dried state; and an area change-restricting means composed of a woven or knitted fabric, non-woven fabric, resin film or resin coating, the area and thickness of which does not substantially change in its water-absorbed state relative to its dried state, the area change-restricting means being bonded or sewed onto at least one side of the water-absorbing woven or knitted fabric at a partial region so as to leave a plurality of other partial regions separated from each other, or at the entire region, the means being to restrict the change in area by water absorption at the bonded or sewed portions of the water-absorbing woven or knitted fabric, wherein the area and thickness of the water-absorbing woven or knitted fabric in its dried state are determined immediately after a test piece of the water-absorbing woven or knitted fabric is left standing in the atmosphere having a temperature at 20°C and a relative humidity at 65% for 24 hours, the area and thickness of the water-absorbing woven or knitted fabric in its water-absorbed state are determined immediately after a test piece of the fabric in its dried state is wetted with water by spraying until the water content of the fabric becomes 70% by weight relative to the weight of the test piece in its dried state, and wherein, when the composite fabric material is wetted with water, the area and thickness, or the area or thickness, of the water-absorbing woven or knitted fabric at the plurality of other partial regions separated from each other increases, thereby changing the three dimensional structure of the composite fabric material.

2. The composite fabric material as defined by claim 1, wherein the water-absorbing woven or knitted fabric contains two types of yarns different from each other in water-absorbing and self-elongating properties, and wherein, when the woven or knitted fabric is stabilized in dimension in the atmosphere having a temperature at 20°C and a relative humidity at 65% and then cut into test pieces of 30 cm long in the warp or wale direction and 30 cm long in the weft or course direction, yarns (1) having high water-absorbing and self-elongating properties and yarns (2) having low water-absorbing and self-elongating properties, respectively taken from the test pieces, satisfy the following requirements:

$$A/B \leq 0.9$$

wherein A represents a mean length of the yarns (1) having high water-absorbing and self-elongating properties, B represents a mean length of the yarns (2) having low water-absorbing and self-elongating properties, the lengths of the respective yarns being measured under a load of 1.76 mN/dtex when the yarn is a non-elastic yarn having an elongation at break of 200% or less, or under a load of 0.0088 mN/dtex when the yarn is an elastic yarn having an elongation at break of higher than 200%.

3. The composite fabric material as defined by claim 2, wherein the water-absorbing woven or knitted fabric is selected from knitted fabrics, and wherein the yarns (1) having high water-absorbing and self-elongating properties and the yarns (2) having low water-absorbing and self-elongating properties form multiple loops of a circular knitting structure.

4. The composite fabric material as defined by claim 2, wherein the water-absorbing woven or knitted fabric is selected from woven fabrics, and wherein the yarns (1) having high water-absorbing and self-elongating properties and the yarns (2) having low water-absorbing and self-elongating properties are combined in parallel with each other, and the combined yarns form warps and/or wefts of the woven fabric.

5. The composite fabric material as defined by claim 2, wherein the water-absorbing woven or knitted fabric is selected from woven fabrics, and wherein the yarns (1) having high water-absorbing and self-elongating properties and the yarns (2) having low water-absorbing and self-elongating properties are arranged alternately with every yarn, or with two or more yarns.

6. The composite fabric material as defined by claim 2, wherein the yarns (1) having high water-absorbing and self-elongating properties and the yarns (2) having low water-absorbing and self-elongating properties are contained in the water-absorbing woven or knitted fabric as composite yarns.

7. The composite fabric material as defined by any one of claims 2 to 6, wherein the yarn (1) having high water-absorbing and self-elongating properties is a polyetherester fiber composed of a polyetherester elastomer comprising a hard segment of polybutylene terephthalate and a soft segment of polyoxyethylene glycol.

8. The composite fabric material as defined by any one of claims 2 to 6, wherein the yarn (2) having low water-absorbing and self-elongating properties is a polyester fiber.

9. The composite fabric material as defined by claim 1, wherein the water-absorbing woven or knitted fabric comprises crimped composite fibers made by developing potential crimping properties of composite fibers comprising a polyester component and a polyamide component which are joined side-by-side with each other.

10. The composite fabric material as defined by claim 1, wherein the area change-restricting means is bonded or sewed onto both sides of the water-absorbing woven or knitted fabric so as to form a three-layer structure.

11. The composite fabric material as defined by claim 1, wherein the area change-restricting means comprises a woven or knitted fabric in a mesh form, the area and thickness of which does not substantially change in its water-absorbed state relative to its dried state, and the yarns of the woven or knitted fabric in a mesh form are bonded or sewed onto at least one side of the water-absorbing woven or knitted fabric.

12. The composite fabric material as defined by claim 1, wherein the area change-restricting means comprises a woven or knitted fabric, non-woven fabric or resin film, the area and thickness of which does not substantially change in its water-absorbed state relative to its dried state, and is bonded or sewed partly onto at least one side of the water-absorbing woven or knitted fabric.

13. The composite fabric material as defined by claim 1, wherein the area change-restricting means comprises a resin coating, the area and thickness of which does not substantially change in its water-absorbed state relative to its dried state, and is bonded or sewed onto at least one side of the water-absorbing woven or knitted fabric at a partial region so as to leave a plurality of other partial regions separated from each other.

14. The composite fabric material as defined by claim 13, wherein the resin coating comprises at least one resin selected from the group consisting of an acrylic resin, a urethane resin, a polyester resin, a silicone resin, a vinyl chloride resin and nylon resin.

15. The composite fabric material as defined by any one of claims 11 to 14, wherein the area of the composite fabric material increases by less than 10% in its water-absorbed state relative to its dried state, and wherein the composite fabric material in its water-absorbed state has an air-permeability, as measured by JIS L 1096-1998, 6.27.1, Method A (Frazir type method), which is at least 10% higher than that in its dried state.

16. The composite fabric material as defined by claim 15, wherein the thickness of the composite fabric material increases by at least 10% in its water-absorbed state relative to its dried state.

17. A textile product comprising a composite fabric material as defined by claim 1.

18. The textile product as defined by claim 17, selected from an outer clothing, a sportswear, an inner clothing, a shoe material, medical and sanitary supplies, bedclothes, a skin material, a carpet, a car-seat fabric and an interior article.

# Fig. 1

### (A)

### (B)

(DRIED STATE)

(WATER-ABSORBED STATE)

# Fig.2

### (A)

### (B)

(DRIED STATE)

(WATER-ABSORBED STATE)

# Fig.3

## (A)

## (B)

(DRIED STATE)

12
13
12

14

(WATER-ABSORBED STATE)

12    13    14

# Fig.4

## (A)

4.5cm

3cm

4.5cm

B                    B

## (B)

19
18

20

# Fig.5

### (A)

2.0cm

2.0cm

B · · · · · · B

21    22    23

### (B)

24
25
24

26

# Fig.6

### (A)

2.0cm

3.5cm

B · · · · · · B

### (B)

32

31

# Fig.7

## (A)

B-1 A-1

## (B)

B-2 A-2

# Fig.8

## (A)

A-3 B-3

## (B)

A-4 B-4

# Fig.9

(A)

B-5

A-5

(B)

B-6

A-6

# Fig.10

(A)

A-7

B-7

(B)

B-8

A-8

# Fig. 11

C-1

D-1

# Fig. 12

## (A)

D-2    C-2

## (B)

D-3    C-3

# Fig. 13

## (A)

E-1

F-1    G-1

## (B)

E-2

F-2    G-2

# Fig. 14

## (A)

27

28  29

## (B)

# Fig. 15

| | C | D | C | D | C | D | C | D | C | D | C | D | C | D | C | D | C | D | C | D | C | D | C | D | |
|---|---|---|---|---|---|---|---|---|---|---|---|---|---|---|---|---|---|---|---|---|---|---|---|---|---|---|
| 24 | × | | × | | × | | × | | × | | × | | × | | × | | × | | × | | × | | × | | b |
| 23 | | ○ | ¥ | ○ | | ○ | ¥ | ○ | | ○ | ¥ | ○ | | ○ | ¥ | ○ | | ○ | ¥ | ○ | | ○ | ¥ | ○ | b |
| 22 | × | | × | | × | | × | | × | | × | | × | | × | | × | | × | | × | | × | | b |
| 21 | ¥ | ○ | | ○ | ¥ | ○ | | ○ | ¥ | ○ | | ○ | ¥ | ○ | | ○ | ¥ | ○ | | ○ | ¥ | ○ | | ○ | b |
| 20 | × | | × | | × | | × | | × | | × | | × | | × | | × | | × | | × | | × | | b |
| 19 | | ○ | ¥ | ○ | | ○ | ¥ | ○ | | ○ | ¥ | ○ | | ○ | ¥ | ○ | | ○ | ¥ | ○ | | ○ | ¥ | ○ | b |
| 18 | × | | × | | × | | × | | × | | × | | × | | × | | × | | × | | × | | × | | b |
| 17 | ¥ | ○ | | ○ | ¥ | ○ | | ○ | ¥ | ○ | | ○ | ¥ | ○ | | ○ | ¥ | ○ | | ○ | ¥ | ○ | | ○ | b |
| 16 | × | | × | | × | | × | | × | | × | | × | | × | | × | | × | | × | | × | | b |
| 15 | | ○ | ¥ | ○ | | ○ | ¥ | ○ | | ○ | | ○ | | ○ | | ○ | | ○ | | ○ | | ○ | | ○ | a |
| 14 | × | | × | | × | | × | | × | | × | | × | | × | | × | | × | | × | | × | | b |
| 13 | ¥ | ○ | | ○ | ¥ | ○ | | ○ | | ○ | | ○ | | ○ | | ○ | | ○ | | ○ | | ○ | | ○ | a |
| 12 | × | | × | | × | | × | | × | | × | | × | | × | | × | | × | | × | | × | | b |
| 11 | | ○ | ¥ | ○ | | ○ | ¥ | ○ | | ○ | | ○ | | ○ | | ○ | | ○ | | ○ | | ○ | | ○ | a |
| 10 | × | | × | | × | | × | | × | | × | | × | | × | | × | | × | | × | | × | | b |
| 9 | ¥ | ○ | | ○ | ¥ | ○ | | ○ | | ○ | | ○ | | ○ | | ○ | | ○ | | ○ | | ○ | | ○ | a |
| 8 | × | | × | | × | | × | | × | | × | | × | | × | | × | | × | | × | | × | | b |
| 7 | | ○ | ¥ | ○ | | ○ | ¥ | ○ | | ○ | | ○ | | ○ | | ○ | | ○ | | ○ | | ○ | | ○ | a |
| 6 | × | | × | | × | | × | | × | | × | | × | | × | | × | | × | | × | | × | | b |
| 5 | ¥ | ○ | | ○ | ¥ | ○ | | ○ | | ○ | | ○ | | ○ | | ○ | | ○ | | ○ | | ○ | | ○ | a |
| 4 | × | | × | | × | | × | | × | | × | | × | | × | | × | | × | | × | | × | | b |
| 3 | | ○ | ¥ | ○ | | ○ | ¥ | ○ | | ○ | | ○ | | ○ | | ○ | | ○ | | ○ | | ○ | | ○ | a |
| 2 | × | | × | | × | | × | | × | | × | | × | | × | | × | | × | | × | | × | | b |
| 1 | ¥ | ○ | | ○ | ¥ | ○ | | ○ | | ○ | | ○ | | ○ | | ○ | | ○ | | ○ | | ○ | | ○ | a |

EP 1 852 249 A1

# Fig. 16

## (A)

3.0cm

3.0cm

B          B

## (B)

## INTERNATIONAL SEARCH REPORT

| International application No. |
| --- |
| PCT/JP2006/303335 |

A. CLASSIFICATION OF SUBJECT MATTER
*B32B5/04*(2006.01), *A41B17/00*(2006.01), *A41D31/02*(2006.01), *B32B7/02*(2006.01)

According to International Patent Classification (IPC) or to both national classification and IPC

B. FIELDS SEARCHED

Minimum documentation searched (classification system followed by classification symbols)
B32B5/04, A41B17/00, A41D31/02, B32B7/02

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2005-36374 A (Teijin Fibers Ltd.), 10 February, 2005 (10.02.05), | 1-8,10-12, 15-18 |
| Y | Par. Nos. [0042], [0058], [0059]; Fig. 7 & WO 2004/113601 A1 | 9,13,14 |
| Y | JP 2004-360094 A (Teijin Fibers Ltd.), 24 December, 2004 (24.12.04), Claim 1; Par. No. [0013] (Family: none) | 9 |
| Y | JP 2004-530571 A (Kimberly-Clark Worldwide, Inc.), 07 October, 2004 (07.10.04), Claims 1 to 4 & US 6914018 B1          & WO 02/34511 A1 | 13,14 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 08 May, 2006 (08.05.06) | Date of mailing of the international search report 16 May, 2006 (16.05.06) |
| --- | --- |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/303335 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2000-158577 A  (Kabushiki Kaisha Farukon Tekunoroji),<br>13 June, 2000 (13.06.00),<br>Claim 1; Par. No. [0014]; Fig. 4<br>(Family: none) | 1-18 |
| A | JP 2005-514244 A  (SCA HYGIENE PRODUCTS AB),<br>19 May, 2005 (19.05.05),<br>Abstract; Fig. 1<br>& US 2003/0144643 A1    & WO 03/059603 A1 | 1-18 |
| A | JP 8-504693 A  (Corovin GmbH.),<br>21 May, 1996 (21.05.96),<br>Abstract; Figs. 1, 3<br>& US 5683787 A | 1-18 |
| A | JP 2003-71965 A  (Toyo Aluminium Foil Products Kabushiki Kaisha),<br>12 March, 2003 (12.03.03),<br>Abstract; Fig. 4<br>(Family: none) | 1-18 |

Form PCT/ISA/210 (continuation of second sheet) (April 2005)

**EP 1 852 249 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003041462 A
- JP 10077544 A
- JP 2002180323 A
- JP 2005036374 A
- JP 2004169262 A
- JP 2000144518 A